Europäisches Patentamt

European Patent Office

Office européen des brevets

(11) Publication number: 0 504 765 A1

# EUROPEAN PATENT APPLICATION

(21) Application number: 92104452.5

(22) Date of filing: 16.03.92

(51) Int. Cl.5: B01D 33/073, B01D 33/46, B01D 33/50

PRIORITY 210391 IT BG91000009.

(30) Priority: 21.03.91

(43) Date of publication of application:
23.09.92 Bulletin 92/39

(84) Designated Contracting States:
AT BE CH DE DK ES FR GB GR LI LU NL PT SE

(71) Applicant: Guerinoni, Michele
Via V. Emanuele, 35
I-24023 Clusone (Bergamo)(IT)

(72) Inventor: Guerinoni, Michele
Via V. Emanuele, 35
I-24023 Clusone (Bergamo)(IT)

(74) Representative: Lecce, Giovanni
STUDIO NORD BREVETTI Via Suardi, 4
I-24100 Bergamo(IT)

(54) Continuous self-cleaning filter for viscous fluids.

(57) Continuous self-cleaning filter for viscous fluids comprising a powered rotor (1) having a filtering drum (6) consisting of a drilled hollow cylinder (7), a metal wire screen (9) wrapped on the cylinder and an external ring (10) with passage holes (11) . The cavity (13) of the hollow cylinder (7) is connected to a drain manifold (16) through an adjustable valve (17).

The rotor (1) is mounted in a rotating manner on a bearing structure or containing case (18) so as to form together a toroidal chamber (19).

A manifold (20) supplies the fluid product to be filtered into said toroidal chamber (19) and a series of ducts (22) discharge the impurities from said toroidal chamber (19).

The outlet ducts (22) comprise adjustable scraping or pressing means (23) which act on the external surface of the ring (10) which constitutes the external part of the drum (6) of the rotor (1).

Fig.1

The present invention relates to a self-cleaning filter for viscous fluids.

More specifically, the present invention relates to a self-cleaning filter for viscous fluids particularly designed to be employed on machines for the processing or regeneration or recovery of plastics.

As is known, in machines for processing fluid products and in particular those which regenerate or recover plastics in general, the filters are one of the most critical parts which influence the processing cycle and productivity of the machine.

Indeed, the filters usually employed require very frequent cleaning which, in some cases, must be performed every 5 to 10 minutes. This necessity obviously results in high maintenance costs and lost production due to stopping of the production process.

Another shortcoming is that the most common filters presently in use, being substantially of the metal wire type or similar, are subject to severe stresses and easy yielding because they are subjected to high operating pressures on the order of 100-150bar as required by the processing of plastics and/or fluids in general.

Every cleaning and/or change of filters also involves considerable waste of material under treatment.

By way of example, knowing that the present cost of virgin polyethylene is approximately 1,500 liras per kilogram, the cost of polyethylene to be regenerated varies from 200 liras to 400 liras per kilogram and the incidence of the above operations and resulting waste is calculated at 50-60 liras per kilogram of virgin product.

Bearing in mind that, presently, only in Italy approximately 500,000 tonnes of plastic are regenerated per year, it is clear that the investment involved is not negligible.

The purpose of the present invention is to eliminate the above shortcomings.

More specifically, the purpose of the present invention is to provide a filter for viscous fluids particularly suited for application to machines for the processing or regeneration or recovery of plastics which would be self-cleaning and thus not require frequent cleaning and/or replacement and would be resistant against stresses caused by the operating pressures.

In accordance with the present invention this and other purposes are achieved by a continuous self-cleaning filter which, in its essential lines, comprises a powered hollow rotor whose surface consists of several filtering layers superimposed and specifically a hollow internal cylinder with drilling and surface slotting, a screen or cloth or metal wire having predetermined cross section wrapped on the internal cylinder in such a manner as to form calibrated interstices, and an external ring or cylinder with holes for the passage of the fluids to be filtered.

The rotor is rotated in a cylindrical chamber to which lead at least one inlet duct and discharge openings with which are combined pressing and scraping means for the dirty filtered residues. The outlet of the filtered and recovered product is coaxial with the rotor axle and comprises an internal pressure flow adjusting valve, which pressure is set so as to be always higher than that present at the outlets of the waste and lower than that of inlet of the products to be filtered.

A powered screw in the outlet duct allows regulation of the quantity of impurities or waste extracted and thus the difference in pressure between the fluid inlet and outlet based on the pressure and temperature at the various points of the filtering drum. Some results which the continuous self-cleaning filter of the present invention provides can be summarized as follows:

- the powered rotor constitutes a continuous action rotating drum filter in which the inlets of the products to be filtered are arranged along at least one longitudinal generating line and the outlets for the filtered waste or impurities are substantially arranged along longitudinal generating lines diametrically opposite the former, or oriented along any preferred or functional arrangement depending on the products to be treated and their characteristics;

- during filtering, the parts recovered through the filtering layers of the rotor inside the central chamber of the rotor to then be discharged through a duct coaxial with the control valve while the wastes are imprisoned in the beehive cells or passage holes of the external ring to be then expelled by pressure difference from the inside to the outside opposite the outlet ducts; and

- the continuous filtering and self-cleaning action is achieved by the combination of continuous rotor rotation and input of fluids to be filtered at a pressure greater than that of discharge of the filtering fluids, which is in turn greater than the atmospheric pressure of discharge of the impurities and waste.

The advantages achieved by the continuous self-cleaning filter of the present invention are essentially the fact that self-cleaning of the filtering drum avoids periodic stopping of the filter and consequently increases the productivity of the system with a considerable reduction of the costs for the fluid products being recovered. In addition, the structure and configuration of the filter of the present invention are such that periodic general maintenance operations are very limited.

Another advantage is that the filtering process can be automatically controlled and programmed on the basis of the processing of fluid pressure and temperature data at the various points of the filter and the capability of presetting the pressers and scrapers by means of the screw.

Another advantage is that the filter of the present invention can be used advantageously not only for the recovery of fluid products to be regenerated but in special production cycles such as for example of continuous plastic film and the like thanks to its continuous operation and steady productivity with uniform pressure drop between input and outlet.

The construction and functional characteristics of the continuous self-cleaning filter for viscous fluids of the present invention can be better understood from the detailed description given below with reference to the figures of the annexed drawings showing a preferred but nonlimiting embodiment thereof and in which:

FIG. 1 shows a schematic longitudinal cross section view of the continuous self-cleaning filter of the present invention,

FIG. 2 shows a schematic longitudinal cross section view of an output duct for the dirty material resulting from filtration, and

FIG. 3 shows a schematic cross section view of the output duct of FIG. 2.

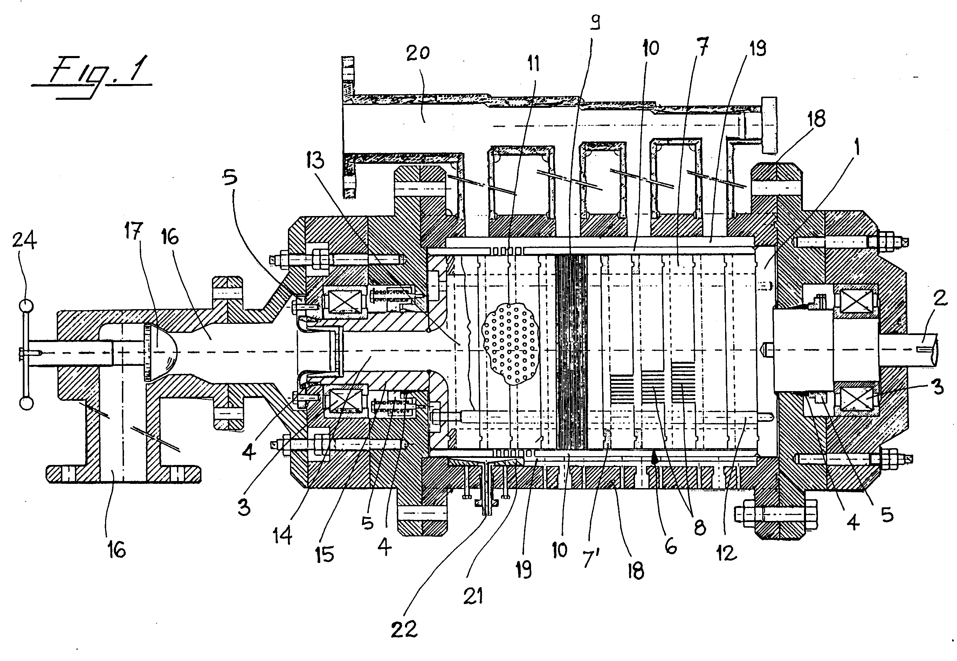

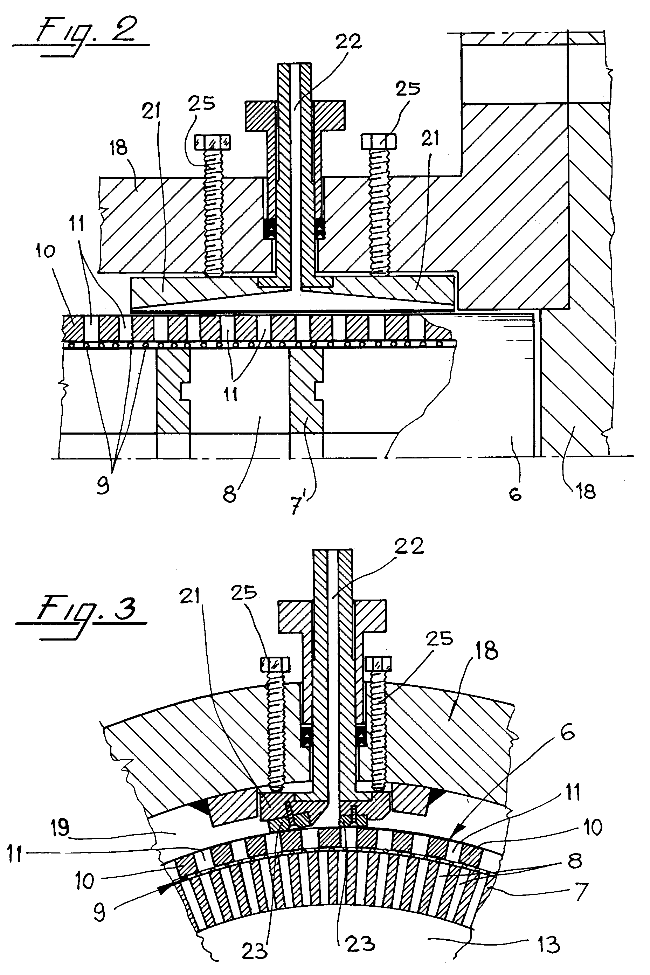

With reference to the figures the continuous self-cleaning filter for viscous fluids of the present invention especially suited for application to machines employed in the processing and/or regeneration of plastics substantially comprises an internal rotor (1) whose rotation axles are mounted on a bearing structure or containing case (18) by means of interposed bearings (3), seals (4), bushes (5) and other conventional sealing systems designed to prevent the outflow of fluid to be treated.

The drive (2) of the rotor extends outside the bearing structure. The central part of the rotor or filtering drum (6) is formed by a first hollow internal cylinder (7) whose surface is provided with holes or slots (8) designed to ensure passage of fluid. On the external surface of the cylinder (7) is wrapped a layer (9) of metal wire with a round cross section or a twisted metal wire with polygonal cross section so that between its turns there remain calibrated interstices. Finally, over said layer (9) is fitted a ring or cylindrical body (10) provided on the surface with holes (11) for passage of the fluid treated. The hollow rotor (1) can be provided in accordance with different techniques or configurations such as, for example, a plurality of annular bodies (7') brought near with slotted peripheral surfaces or by combining straight, undulated and/or shaped packages of plates assembled on tie-rods (12). As an alternative, the rotor can also be provided with ceramic filters or the like.

In the central part of said filtering drum (6) is a chamber (13) which comprises an outlet duct (14) substantially coaxial with one of the supporting axles (15) of the rotor (1) on the bearings (3). Said supporting axle (15) is preferably opposite that of the drive (2).

The outlet duct (14) is connected to a manifold (16) on which is placed a manual or powered control valve (17). The manifold (16) is substantially joined to the body or containing case in which is contained the filtering drum (6) of the rotor (1). Between the external surface of the cylindrical body (10) of the filtering drum (6) and the internal one of the case (18) is formed a toroidal chamber (19).

The bearing structure or containing case (16) is provided on one side with at least one manifold (20) with longitudinal generating line to supply the fluid or plastic product to be filtered into the toroidal chamber (19) and, on the opposite side, with a series of ducts (22) having generating lines and orientation opposite those of the manifolds (20) for outlet of waste or impurities from said toroidal chamber (19). The outlet zones of the impurities or waste are delimited by conveying tiles (21) facing the external surface of the cylindrical ring or body (10).

On the free surface of the tiles (21) are fixed adjustable presser & scraper devices (23).

The fluid or plastic product to be filtered coming at a pressure $P_1$ from the supply manifold (20) is input to the toroidal chamber (19).

During rotation of the rotor (1) the material under pressure to be filtered is distributed over the entire toroidal chamber (19) except the impurities and waste outlet zones delimited by the tiles (21).

Because of the pressure $P_1$ at the inlet, which can reach even high values of 120-150bar, the material to be filtered is pushed through the spaces consisting of the holes (11) in the cylindrical body (10), the weft or meshes in the intermediate layer (9) of wire or metal screen and holes or slots (8) in the internal cylinder (7). In said phase, the filtered material to be recovered passes between the above wefts or meshes in the layer (9), between the holes or slots (8) in the internal cylinder (7) and is collected in the central chamber (13) of the filtering drum (6) in which is present a pressure $p_2$ lower than the input pressure $p_1$, e.g. 100-120bar.

The pressure $p_2$ in the central chamber (13) is in turn higher than the pressure $p_0$ present beneath tee tiles (21) of the impurities and waste outlet ducts (22).

The impurities or waste have a configuration and consistency higher than those of the recoverable fluid and are trapped in the beehive cells formed by the holes (11) of the external cylinder (10) of the drum (6) until, during rotation of the rotor (1), the material still to be filtered exerts a pressure on them from the outside inward.

The rotor (1) in its rotary motion brings the holes (11) of the ring (10) cyclically opposite a tile (21).

When an external surface zone of the cylinder (10) encounters in rotation one of the tiles (21) the waste in the corresponding holes (11) escapes the pressure $p_1$ and is subject to the pressure $p_0$ present beneath the tiles. Said pressure $p_0$ being less than that $p_2$ present in the central chamber (13), the waste is pushed out of the holes (11) and collected by presser & scraper devices (23) beneath the tiles (21) and conveyed into the outlet ducts (22).

Expulsion of the wastes from the holes (11) of the external cylinder (10) thus generates a self-cleaning action at each tile (21). As the rotor (1) continues to rotate each cleaned zone of the cylinder (10) again passes opposite the toroidal chamber (19) and resumes its filtering action. The filtered and/or regenerated product from the central chamber (13) is then made to flow through the outlet duct (14) and the manifold (16). The valve (17) is used to adjust the aperture and hold steady the outlet pressure $p_2$ or better yet to hold steady the pressure difference between $p_1$ and $p_2$.

The outlet pressure $p_0$ of the waste is preferably equal to atmospheric pressure.

Depending on application requirements, the control valve (17) can be equipped with a manual handwheel (24) or powered. Similarly the presser & scraper devices (23) can be equipped with position and pressure adjusters of the screw type (25) with manual operation or with hydraulic pistons which can provide uniform adherence of the presser & scraper device (23) on the drum (6) even in the presence of any deformations of the drum.

To control the pressure $p_0$ inside the duct (22) a powered screw can be mounted inside the duct with the function of extracting the impurities and waste. The quantity of impurities extracted and the pressure $p_0$ can be varied by varying the rotation speed of the screw. By means of this device the self-cleaning filter for viscous fluids of the present invention can be used in conventional or automated plants in which, by electronic processing of the temperature and pressure data taken by sensors in appropriate points of the filter, it is possible to automatically control the continuous filtering process and achieve steady pressure of the filtered product at the outlet or steady pressure difference between the inlet and the outlet. Thanks to these characteristics the self-cleaning filter of the present invention can be used also for special applications such as for example those concerned with the continuous production of plastic films. For this application, indeed, uniformity in the motion characteristics of the viscous fluids such as pressure, temperature, flowrate, viscosity and so forth eliminates the actual variations in thickness found in continuously manufactured plastic films.

**Claims**

1. Continuous self-cleaning filter for viscous fluids characterized in that it comprises a powered rotor (1) having a central filtering drum (6) consisting of a hollow cylinder (7) provided with a central chamber (13) and holes or slots (8) on the surface and is covered with a layer (9) of metal wire with calibrated meshes and by a ring or external cylindrical body (10) having the surface provided with holes (11) and said rotor (1) being mounted in a movable manner on a bearing structure or containing case (18), a discharge manifold (16) connected to the central chamber (13) through a control valve (17), a toroidal chamber (19) formed between the external surface of the cylindrical body (10) of the filtering drum (6) and the internal one of the containing case (18), at least one manifold (20) for feeding the fluid or plastic product to be filtered into the toroidal chamber (19), and a series of outlet ducts (22) for the impurities or waste from said toroidal chamber (19).

2. Continuous filter in accordance with claim 1 characterized in that the hollow cylinder (7) consists of a plurality of close annular bodies (7') with slotted peripheral surfaces and assembled together by longitudinal tie-rods (12).

3. Continuous filter in accordance with claim 1 characterized in that the rotor (1) is a ceramic filter.

4. Continuous filter in accordance with any one of the above claims characterized in that the manifold (20) for supply of the fluid or plastic product to be filtered is arranged in accordance with a longitudinal generating line and the outlet ducts (22) are arranged in accordance with generating lines or orientations opposite those of the manifold (20).

5. Continuous filter in accordance with any one of the above claims characterized in that each outlet duct (22) is provided with conveying tiles (21) facing the external surface of the ring or cylindrical body (10).

6. Continuous filter in accordance with claim 5 characterized in that each conveying tile (21) is provided with a presser & scraper device (23) controlled by a position and pressure regulator (25) so as to adhere to the surface of the drum (6).

7. Continuous filter in accordance with any one of the above claims characterized in that a powered screw is mounted inside each outlet duct (22) to control the pressure ($p_0$) inside the duct (22) and the quantity of impurities or waste to be expelled.

8. Continuous filter in accordance with any one of the above claims characterized in that the control valve (17) is provided with a handwheel (24) to control the pressure ($p_2$) in the central chamber (13).

9. Continuous filter in accordance with any one of the above claims characterized in that the pressure ($p_1$) of the fluid in the toroidal chamber (19) is greater than that ($p_2$) in the central chamber (13) which, in turn, is greater than that ($p_0$) in the duct (22).

10. Continuous filter in accordance with any one of the above claims characterized in that the pressure ($p_0$) of the fluid in the outlet duct (22) is equal to atmospheric pressure.

11. Continuous filter in accordance with any one of the above claims characterized in that, due to the pressure difference $p_2$-$p_0$, the impurities or waste pass from the holes (11) in the external cylindrical body (10) to the outlet ducts (22) through the conveying tiles (21) in engagement relation with the corresponding presser & scraper devices (23).

*Fig. 1*

EP 0 504 765 A1

Fig. 2

Fig. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-1 903 774 (B.S. BURRELL) | 1,4,5,8, 9 | B01D33/073 |
| | --- | | B01D33/46 |
| X | DE-A-3 716 707 (POHL HARALD) | 1,4,9 | B01D33/50 |
| A | * column 1 - column 5 * | 8 | |
| | --- | | |
| X | WO-A-9 003 833 (HERRMANN) | 1,2,9 | |
| A | * page 8, line 20 - line 25 * | 6 | |
| | * page 22, line 19 - page 27, line 17 * | | |
| | --- | | |
| A | GB-A-749 261 (APPARATEBAU) | 5,6 | |
| | * page 1, line 93 - page 2, line 5 * | | |
| | --- | | |
| A | EP-A-0 049 746 (KLÖCKNER-HUMBOLDT-DEUTZ) | | |
| | ----- | | |
| | | | **TECHNICAL FIELDS SEARCHED (Int. Cl.5)**<br><br>B01D |

The present search report has been drawn up for all claims

| Place of search | Date of completion of the search | Examiner |
|---|---|---|
| THE HAGUE | 05 JUNE 1992 | DE PAEPE P.F.J. |